**Europäisches Patentamt**

**European Patent Office**

**Office européen des brevets**

(19)

(11) Veröffentlichungsnummer: **0 218 102**
A2

# (12) EUROPÄISCHE PATENTANMELDUNG

(21) Anmeldenummer: **86112284.4**

(22) Anmeldetag: **05.09.86**

(51) Int. Cl.⁴: **B 29 C 65/02**, B 29 C 65/50, B 29 C 53/36 // B29L9:00, B29L23:22

(30) Priorität: **10.10.85 DE 3536172**

(43) Veröffentlichungstag der Anmeldung: **15.04.87 Patentblatt 87/16**

(84) Benannte Vertragsstaaten: **CH DE IT LI SE**

(71) Anmelder: **ROBERT BOSCH GMBH, Postfach 50, D-7000 Stuttgart 1 (DE)**

(72) Erfinder: **Rebmann, Manfred, Lisztstrasse 28, D-7056 Weinstadt 1 (DE)**
Erfinder: **Weigold, Helmut, Dipl.-Ing., Furtwängler Strasse 21, D-7000 Stuttgart 1 (DE)**

(54) Verfahren und Vorrichtung zum Herstellen einer Stossnaht mit Deckband an einem Rohr aus einer Mehrschicht-Packstoffbahn.

(57) Es wird ein Verfahren und eine Vorrichtung zum Herstellen einer Stoßnaht an einem Packstoffrohr (2) vorgeschlagen, wobei die Schweißwärme durch Anlegen eines hochfrequenten elektromagnetischen Wechselfeldes von einer Induktionsspule (12) erzeugt wird. Um Stromüberschläge an den Schnittkanten einer metallischen Einlage des Packstoffes im Stoßbereich der Ränder (3, 4) einer Packstoffbahn (1) zu vermeiden, werden die Ränder in einem bestimmten Abstand zueinander geführt. Dazu hat die Vorrichtung ein Trennschwert (20), das im Wirkbereich des elektromagnetischen Wechselfeldes zwischen die auf Stoß liegenden Ränder der Packstoffbahn ragt.

0218102

R. 20260

30.9.1985 Gl/Pi

ROBERT BOSCH GMBH, 7000 STUTTGART 1

Verfahren und Vorrichtung zum Herstellen einer Stoßnaht mit Deckband an einem Rohr aus einer Mehrschicht-Packstoffbahn

Stand der Technik

Die Erfindung geht aus von einem Verfahren nach der Gattung des Hauptanspruchs. Bei einem beispielsweise durch die DE-OS 26 53 753 bekannt gewordenen Verfahren dieser Art werden die Ränder der beiden Kantenbereiche der Packstoffbahn gegeneinander geführt und laufen auf Stoß liegend durch das elektrische Wechselfeld der Induktionsspule. Dabei kommt es immer wieder vor, daß die Ränder der metallischen Einlage, die zwischen nichtleitenden Schichten eingebettet ist, an manchen Stellen, insbesondere dort, wo Schneidspitzen vorstehen, miteinander in Berührung kommen. An diesen Stellen können, verursacht durch die elektrischen Wechselfelder, Stromüberschläge in Form von Funken auftreten, die hauptsächlich in die an der metallischen Einlage anliegende thermoplastische Schutzschicht Löcher brennen. Diese Erscheinung im Bereich der Längsnaht tritt zudem auf, wenn mit einem so hergestellten Packstoffrohrstück, das nach dem oben angeführten Verfahren hergestellt ist, ein Deckel mit induziertem elektrischem Wechselfeld verschweißt wird. An den Durchbrennstel-

...

- 2 -

len, die von außen kaum sichtbar sind, kann bei einem aus
dem Rohr hergestellten und mit einer Flüssigkeit gefüllten
Verpackungsbehälter Flüssigkeit durch die Löcher in die
tragende Schicht des Packstoffs, die beispielsweise aus
Karton besteht, eindringen und bei längerer Lagerzeit diesen durchsetzen und aufquellen. An grösseren Durchbrennstellen kann die Flüssigkeit aber auch nach außen durchtreten. Solche undichten Stellen an Verpackungsbehältern
sind jedoch höchst unerwünscht, da sie nicht nur die schadhafte Packung selbst unverkäuflich machen, sondern auch in
einem Packungsgebinde die benachbarten Packungen verunreinigen.

Vorteile der Erfindung

Bei dem erfindungsgemäßen Verfahren mit den kennzeichnenden
Merkmalen des Hauptanspruchs wird zwischen den auf Stoß liegenden Rändern der Packstoffbahn ein schmaler Spalt erzeugt,
durch den ein Funkenüberschlag verhindert wird. Bei einer
vorteilhaften Vorrichtung zum Durchführen des erfindungsgemäßen Verfahrens wird dieser Spalt durch ein dünnes Trennschwert aus nichtleitendem  Material eingestellt, das zusätzlich einen Funkenüberschlag verhindert.

Durch die in den Unteransprüchen aufgeführten Maßnahmen sind
vorteilhafte Weiterbildungen der angegebenen Vorrichtung
möglich. Sehr vorteilhaft ist dabei die Anordnung des Trennschwertes in einem Backen, der auch die Induktionsspule
trägt.

Zeichnung

Ein Ausführungsbeispiel ist in der Zeichnung dargestellt
und wird in der nachfolgenden Beschreibung näher erläutert.

...

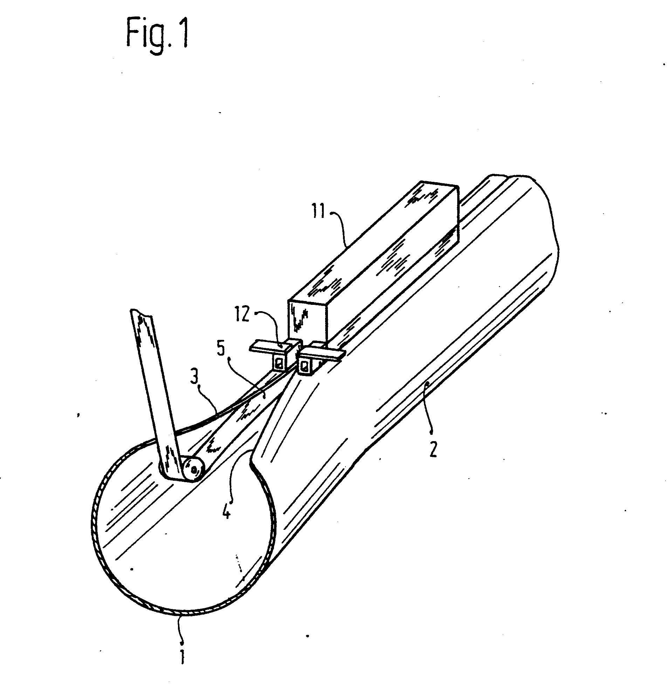

Es zeigen Figur 1 eine Vorrichtung zum Herstellen eines
Packstoffrohres vereinfacht in schaubildlicher Darstellung,

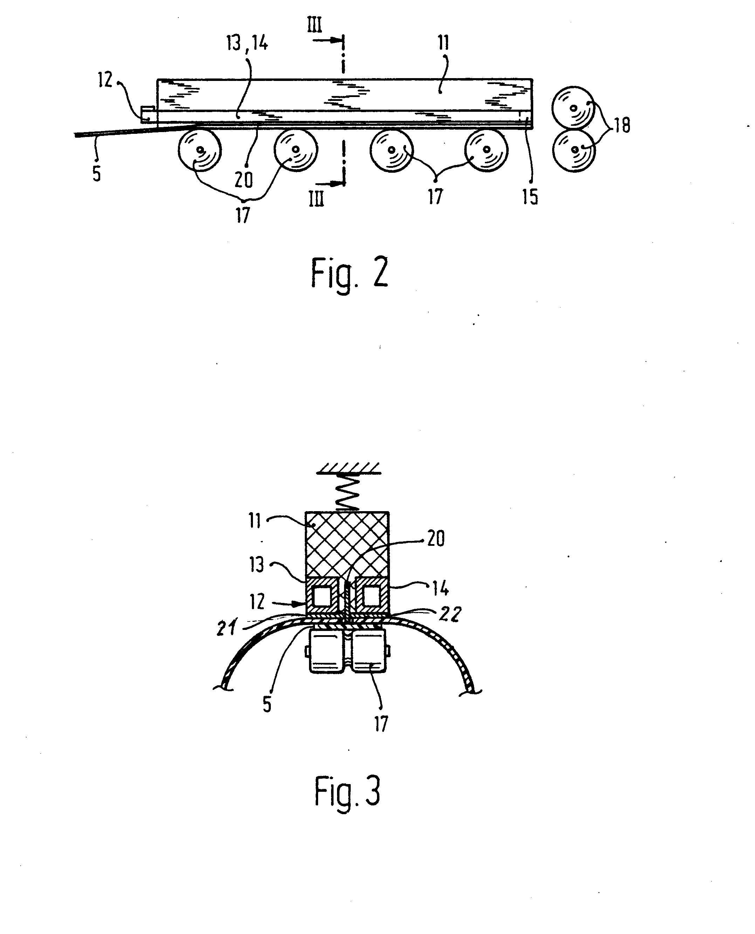

Figur 2 die Vorrichtung nach Figur 1 in Seitenansicht und
Figur 3 die Vorrichtung nach Figur 1 im Querschnitt in der
Ebene III-III der Figur 2.

Beschreibung des Ausführungsbeispiels

Eine Packstoffbahn 1, die von einer Vorratsrolle abgezogen
wird, wird zu einem Schlauch oder Rohr 2 geformt, so daß
ihre Ränder 3, 4 gegeneinander stoßen. Zum Verbinden der
beiden Ränder 3, 4 miteinander wird ein Deckband 5 so zugeführt, daß es den Stoß überbrückend im Innern des Rohrs 2
im Bereich der Ränder 3, 4 anliegt. Durch Verschweißen des
Deckbandes 5 mit den an die Ränder 3, 4 anschließenden Randbereichen entsteht eine feste und dichte Längsnaht. Die
Packstoffbahn 1 ist beispielsweise ein Mehrschichtmaterial
mit von außen nach innen einer Trägerschicht aus Karton,
einer Dichtschicht aus Aluminiumfolie und einer inneren
Schutzschicht aus einem thermoplastischen Kunststoff, beispielsweise Polyäthylen. Das Deckband 5 ist vorzugsweise
ebenfalls mehrschichtig; es hat eine Trägerschicht aus
Polypropylen oder Polyamid und eine Schweißschicht aus
Polyäthylen, die mit der Schutzschicht der Packstoffbahn
1 in deren Randbereichen in Berührung gebracht und angepreßt sowie unter Zuführung von Wärme mit dieser fest verschweißt wird. Der im vorhergehenden und nachfolgenden verwendete Ausdruck "Schweißen" soll nicht einengend ausgelegt
werden, sondern soll auch den in der Verpackungstechnik üblichen Ausdruck "Heißsiegeln" umfassen.

Zum Erzeugen der zum kontinuierlichen Verschweißen der
Schweißschicht des Deckbandes 5 mit der Schutzschicht der
Packstoffbahn 1 erforderlichen Wärme ist dem gebildeten

...

Stoß der Ränder 3, 4 der Packstoffbahn 1 auf der Außenseite des Rohres 2 ein Backen 11 mit einer Induktionsspule
12 zugeordnet, die an einen Wechselstromgenerator angeschlossen ist. Die Induktionsspule 12 hat die Form einer U-förmigen
Schleife mit zwei parallel zueinander verlaufenden Schenkeln
13, 14 und einem Verbindungsteil 15. Die beiden Schenkel 13,
14 der Induktionsspule 12 sind in dem Backen 11 so angeordnet, daß sie in Deckung mit den auf Stoß liegenden Randbereichen der Packstoffbahn 1 und dem etwa 10 mm breiten Deckband 5 sind. Durch Speisen der Induktionsspule 12 mit einem
hoch- oder mittelfrequenten Wechselstrom wird um die Schenkel 13, 14 der Spule 12 ein elektromagnetisches Wechselfeld
erzeugt, das in den anliegenden, an die Ränder 3, 4 anschließenden Bereichen der metallischen Dichtschicht der
Packstoffbahn 1 elektromagnetische Wirbelströme induziert.
Die Energie der Wirbelströme wird in Wärme umgesetzt, die
von der Dichtschicht auch auf die anliegende Schutzschicht
und die Schweißschicht des Deckbandes 5 übergeht. Die teigig gemachten thermoplastischen Schichten werden unter dem
nachgiebigen Druck zwischen dem Backen 11 und in Deckung
mit diesem angeordneten Rollen 17 sowie mit einem dem Bakken 11 nachgeordneten Rollenpaar 18 miteinander verbunden,
so daß sie nach Abkühlen eine feste Verbindung zwischen
den auf Stoß gelegten Randbereichen der Packstoffbahn 1
und dem Deckband 5 schaffen.

Um zu verhindern, daß während der Einwirkung des hochfrequenten elektromagnetischen Wechselfeldes Stromüberschläge in Form von Funken zwischen den auf Stoß liegenden Rändern der metallischen Schicht der Packstoffbahn
1 auftreten, werden die Ränder 3, 4 der Packstoffbahn 1
im Bereich des Stoßes in einem bestimmten, geringen Abstand zueinander geführt. Dazu ist in dem Backen 11 ein
Trennschwert 20 eingesetzt, das aus der den Randbereichen
der Packstoffbahn 1 zugewandten Seite auf der gesamten

...

Länge des Backens 11 um die Dicke der Packstoffbahn 1
rippenartig vorragt. Das etwa 0,6 mm dicke Trennschwert 20
besteht aus einem nichtmagnetisierbaren, nichtleitenden
Werkstoff, vorzugsweise aus Keramik wie beispielsweise Aluminiumoxid. Vorzugsweise ragt das Trennschwert 20 am Einlaufende der Packstoffbahn 1 in den Bereich des Schweißbackens 11 weiter aus der Unterseite des Backens 11 hervor als an dessen Auslaufende. Das Trennschwert 20 erzeugt beim Formen des Rohres 2 aus der Packstoffbahn 1
im Stoßbereich der Ränder 3, 4 einen schmalen Spalt zwischen diesen und verhindert ein Überspringen von Funken
zwischen den Rändern der metallischen Dichtschicht der
Packstoffbahn 1. Das Trennschwert 20 ist in der Symmetrieebene der beiden Schenkel 13, 14 der Induktionsspule 12
angeordnet. Da es vorzugsweise aus Keramikmaterial besteht,
wirkt es elektrisch isolierend und hat außerdem einen geringen Abrieb. Um den Abrieb an der mit der Packstoffbahn 1
in Berührung kommenden Seite des Backens 11 und der Induktionsspule 12 klein zu halten, sind an der Unterseite der
beiden Schenkel 13, 14 der Induktionsspule 12 dünne Sohlen
21, 22 aus Keramikmaterial befestigt.

Um ein übermäßiges Erwärmen des Backens 11 und der Induktionsspule 12 während des Dauerbetriebes der Vorrichtung
zu vermeiden, ist die Induktionsspule 12 aus einem Hohlprofil geformt, durch das ein flüssiges Kühlmittel geleitet wird. Beim oben beschriebenen Ausführungsbeispiel ist
die Induktionsspule 12 als einfache, U-förmige Schleife
ausgebildet, sie kann im Rahmen der Erfindung jedoch auch
eine andere Gestalt haben.

Ergänzend wird bemerkt, daß ein den Stoß der Ränder 3, 4
überbrückendes Deckband nicht nur auf der Innenseite des
Rohrs 2 sondern auch an dessen Außenseite angeschweißt
werden kann.

R. 20260
30.9.1985 Gl/Pi

ROBERT BOSCH GMBH, 7000 STUTTGART 1

Ansprüche

1. Vorrichtung zum Herstellen einer Stoßnaht an einem Rohr (2) aus einer mehrschichtigen, eine Einlage aus Metall und wenigstens eine Außenschicht aus einem thermoplastischen Kunststoff aufweisenden Packstoffbahn (1) durch Verschweissen der auf Stoß gelegten Ränder (3, 4) der Bahn mit einem unterlegten Deckband (5) mit einer thermoplastischen Kunststoffschicht in einem hoch- oder mittelfrequenten elektromagnetischen Wechselfeld, in dessen Wirkbereich die beiden Ränder der Packstoffbahn beim kontinuierlichen Vorbeiführen erwärmt und mit dem Deckband verpreßt werden, dadurch gekennzeichnet, daß die Ränder (3, 4) der Packstoffbahn (1) im Wirkbereich des hochfrequenten elektromagnetischen Wechselfeldes in einem bestimmten Abstand zueinander geführt werden.

2. Vorrichtung zum Durchführen des Verfahrens nach Anspruch 1, mit einer langgestreckten Induktionsspule (12), dadurch gekennzeichnet, daß im Bereich der Induktionsspule (12) zwischen die auf Stoß gelegten Ränder (3, 4) der Packstoffbahn (1) ein Trennschwert (20) aus elektrisch isolierendem Material ragt.

3. Vorrichtung nach Anspruch 2, dadurch gekennzeichnet, daß das Trennschwert (20) in einem Backen (11) angeordnet ist und aus diesem rippenartig vorragt sowie sich in der Symmetrieebene paralleler Leiter (13, 14) der Induktionsspule (12) erstreckt.

...

0218102

20260

4. Vorrichtung nach Anspruch 1, dadurch gekennzeichnet, daß das Trennschwert (20) aus einem Keramikmaterial besteht.

Fig.1

Fig. 2

Fig. 3